## Europäisches Patentamt
## European Patent Office
## Office européen des brevets

(11) Veröffentlichungsnummer: **0 367 137 B1**

# EUROPÄISCHE PATENTSCHRIFT

(45) Veröffentlichungstag der Patentschrift: **16.03.94**

(21) Anmeldenummer: **89119985.3**

(22) Anmeldetag: **27.10.89**

(51) Int. Cl.⁵: **C09J 201/00**, C09J 5/02,
C08J 5/12, D06M 17/04,
D06M 17/08, D06M 17/10

(54) **Haftvermittler.**

(30) Priorität: **29.10.88 DE 3836924
18.04.89 DE 3912626**

(43) Veröffentlichungstag der Anmeldung:
**09.05.90 Patentblatt 90/19**

(45) Bekanntmachung des Hinweises auf die
Patenterteilung:
**16.03.94 Patentblatt 94/11**

(84) Benannte Vertragsstaaten:
**AT BE CH DE ES FR GB IT LI NL SE**

(56) Entgegenhaltungen:
**EP-A- 0 251 490
US-A- 3 522 120
US-A- 4 599 385**

(73) Patentinhaber: **Henkel Kommanditgesellschaft
auf Aktien**

**D-40191 Düsseldorf(DE)**

Patentinhaber: **E.I. DU PONT DE NEMOURS
AND COMPANY
1007 Market Street**

**Wilmington Delaware 19898(US)**

(72) Erfinder: **Wichelhaus, Jürgen, Dr. Dipl.-Chem.
Egenstrasse 60
D-5600 Wuppertal(DE)**
Erfinder: **Andres, Johannes
Bonner Strasse 14
D-4000 Düsseldorf(DE)**
Erfinder: **Rebouillat, Serge, Dr.
Airans. Farges
F-01550 Collonges. Fort L'Ecluse(FR)**
Erfinder: **Gruber, Werner, Dr. Dipl.-Chem.
Franz-Karl-Kremer-Strasse 7
D-4052 Korschenbroich(DE)**

(74) Vertreter: **von Kreisler, Alek, Dipl.-Chem. et al
Patentanwälte
von Kreisler-Selting-Werner
Postfach 10 22 41
D-50462 Köln (DE)**

**Beschreibung**

Die Erfindung betrifft einen neuen Haftvermittler auf Basis einer Carbonylverbindung mit mindestens einer aktivierten Doppelbindung und eines Polymeren mit funktionellen Gruppen, der zur Erhöhung der Bindefestigkeit von Klebstoffen zu schwer zu verklebenden Metalloberflächen wie beispielsweise Oberflächen von Buntmetallen, verzinkten oder chromatierten Blechen oder Aluminium eingesetzt werden kann, sowie ein Verfahren zu dessen Herstellung. Die Erfindung betrifft weiterhin die Verwendung eines solchen Haftvermittlersystems auf Polymeren, insbesondere auf Polymerfasern.

Bei der Verklebung schwer zu verklebender Metalle ist es üblich, Haftvermittler, oftmals Primer genannt, einzusetzen. Dies gilt insbesondere bei der Verwendung von Schmelzklebstoffen.

Bekannte Haftvermittler sind z.B. Produkte auf Isocyanatbasis, mit hohem Gehalt an Isocyanatgruppen sowie auch organofunktionelle Silane oder Siloxane. In beiden Fällen handelt es sich um hochreaktive Verbindungen, die bei der Herstellung, Lagerung und beim Einsatz der besonderen Sorgfalt bedürfen. Darüberhinaus zeigen auch diese Haftvermittler, insbesondere bei Buntmetallen oder Metallen mit veredelten Oberflächen, nur begrenzte Wirksamkeit. Sehr große Schwierigkeiten treten zum Beispiel beim Verkleben von Kupfer auf.

Die Beschichtung von Polymeren, insbesondere von Fasern mit einem derartigen Oberflächenbehandlungsmittel führt zu einer verbesserten Verarbeitbarkeit der Fasern und zwar insbesondere bei an sich schwer zu verarbeitenden Hochmodulfasern, wie aromatischen Polyamidfasern und dergleichen. Weiterhin führt das Oberflächenbehandlungsmittel beim Einbetten der Faser in eine Polymermatrix zu einer verbesserten Veträglichkeit und einer verbesserten Kraftübertragung.

Im Sinne der Erfindung werden unter Fasern Endlosfasern, Faserschnitte, Faserverbunde, kombinierte gedrillte oberflächenbehandelte Fasern, Pulpe, Garne und dergleichen, aber auch textile Flächengebinde, seien sie gewoben, gestrickt, gewirkt oder in anderer Weise, z.B. als Nonwoven, verbunden, verstanden.

Zur Behandlung von Fasern, beispielsweise von aromatischen Polyamidfasern, werden in der Technik vielfach Epoxidharz-Zubereitungen oder auch andere Harze verwendet. Derartige Zubereitungen werden beispielsweise in den US-Patentschriften 4,557,967 und 4,652,488 beschrieben. Der Einsatz derartige Oberflächenbehandlungsmittel führt oftmals zu einer Verschlechterung der Verarbeitbarkeit und einer Erhöhung der Wasseraufnahme und Wasseranfälligkeit. Als Folge davon treten bei der nachfolgenden textilen Bearbeitung, wie beispielsweise beim Stricken oder Weben, Aufspleißungen und Ablagerungen auf.

Der Erfindung liegt die Aufgabe zugrunde, ein neues Haftvermittlersystem zu schaffen, daß durch Wärme aktivierbar ist, ansonsten aber ohne Schwierigkeiten gelagert werden kann.

Aufgabe der Erfindung ist es, die Verwendung eines Haftvermittlers zur Oberflächenbehandlung von Fasern vorzuschlagen, vorzugsweise von Polyamidfasern, insbesondere von aromatischen Polyamidfasern. Die damit beschichteten Fasern zeigen verbesserte textile Verarbeitbarkeit und geringere Wasseraufnahme. Eine weitere Aufgabe der Erfindung ist es, ein Verfahren zur Herstellung beschichteter faserförmiger Polyamide herzustellen, bei dem die Beschichtung mit dem Oberflächenbehandlungsmittel auf der noch nie getrockneten Faser (on line) oder auf der getrockneten Faser (off line) stattfinden kann.

Gegenstand der Erfindung ist daher ein wärmeaktivierbarer Haftvermittler zur Oberflächenbehandlung von Metallen oder Kunststoffen vor dem Verkleben, enthaltend
- 0,1 - 10 Gew.-% einer Carbonylverbindung mit mindestens einer aktivierten Doppelbindung, wobei als Carbonylverbindung ungesättigte Dicarbonsäuren eingesetzt werden, bei denen mindestens eine Carbonylgruppe in Konjugation mit der Doppelbindung ist und/oder deren Derivate enthalten sind
- 5 - 30 Gew.-% eines Polymeren mit funktionellen Gruppen, wobei als Polymere mit funktionellen Gruppen Polykondensate, Polyaddukte und/oder Polymerisate mit Carbonsäure-gruppen, Aminogruppen und/oder Hydroxylgruppen eingesetzt werden.
- 0 - 10 Gew.-% weiterer Hilfsstoffe sowie
- ein oder mehrere organische Lösungsmittel ad 100 Gew.-%.

In einer breiten Ausgestaltung der Erfindung sind dies alpha-beta-ungesättigte Carbonsäuren, deren Nitrile, Amide, Ester und/oder Anhydride, wobei diese Säuren auch mit Alkylgruppen, Carboxylgruppen oder anderen Substituenten versehen sein können.

Unter diesen Verbindungen sind ungesättigte Dicarbonsäuren, bei denen mindestens eine Carbonylgruppe in Konjugation mit der Doppelbindung steht bevorzugt und unter diesen wiederum die Ester und/oder Halbester solcher Carbonsäuren.

Besonders bevorzugte Verbindungen sind Ester und/oder Halbester der Maleinsäure, Crotonsäure, Itaconsäure, Fumarsäure und/oder Cyclohex-4-en-1,2-Dicarbonsäure mit primärem oder sekundärem Alkohol, insbesondere mit primären $C_1$ - $C_6$ Alkoholen.

Die günstigsten Ergebnisse wurden bisher mit Produkten erhalten, wie sie durch Lösen von Maleinsäureanhydrid in $C_1$ - $C_6$ Alkoholen vorzugsweise bei Siedetemperatur und Verweilzeiten bis zu 2 Stunden entstehen.

Unter diesen Produkten sind die Reaktionsprodukte besonders bevorzugt, die durch Lösen von Maleinsäureanhydrid in Isopropanol am Siedepunkt des Isopropanols während Reaktionszeiten von 0,5 - 2 Stunden entstehen, also Gemische von Estern und/oder Halbestern der Maleinsäure und des Isopropanols. In typischen, erfindungsgemäßen Zubereitungen liegt die Carbonylverbindung mit mindestens einer aktivierten Doppelbindung in Mengen von 0,1 - 8 Gew.-% bezogen auf Gesamtzubereitung vor.

Als weiteren Bestandteil enthalten die erfindungsgemäßen Haftvermittler ein Polymer mit funktionellen Gruppen. Geeignet sind hier filmbildende Polymere mit Carbonsäure-, Amino- und/oder Hydroxylgruppen; unter Polymeren werden hier Polykondensate, Polyaddukte und Polymerisate verstanden. Typische, geeignete Polykondensate sind Polyester, Polyamide, Polyetheramide, Polyesteramide. Typische Polyaddukte sind Polyether oder Polyurethane. Typische, geeignete Polymerisate sind Polyacrylate, Polymethacrylate und/oder Polyvinylester, bzw. deren Copolymere mit anderen oder mit sich selbst.

Unter den genannten Polymeren sind die Polykondensate bevorzugt und unter diesen, die Polyamide und die Polyesteramide und Polyetheramide. Besonders bevorzugt sind Polyamide auf Basis dimerisierter Fettsäuren. Eingesetzt werden können jedoch auch funktionalisierte Polymere wie Amin-terminierte Polyether, OH-terminierte Polyester und dergleichen.

Bei der Auswahl eines geeigneten Polymers hat der Fachmann in jedem Fall auf die Löslichkeit zu achten. Wird als Carbonylverbindung mit mindestens einer aktivierten Doppelbindung ein Ester eingesetzt, so ist es bevorzugt das Polymer in dem Alkohol zu lösen, mit dem die der Carbonylverbindung zugrunde liegende Carbonsäure verestert oder teilverestert ist.

Unter den Polyamiden auf Dimerfettsäurebasis werden im Sinne der Erfindung Polyamide verstanden, bei deren Aufbau als eine der mehrfunktionellen Säurekomponenten Dimerfettsäure mitverwandt worden ist oder bei denen als eine der mehrfunktionellen Aminkomponenten Dimerfettsäure-Diamin eingesetzt worden ist.

Polyamide auf Basis Dimerfettsäure bestehen im allgemeinen aus difunktionellen Dicarbonsäuren, die auch begrenzte Mengen monofunktioneller Anteile enthalten können einerseits und aus difunktionellen Aminen andererseits. Als difunktionelle Carbonsäuren werden neben oder anstatt von Dimerfettsäure noch aliphatische oder aromatische Dicarbonsäuren mit 2 bis 20 C-Atomen eingesetzt. Als Diamine werden aliphatische oder zykloaliphatische Diamine mit 2 bis 36 C-Atomen und jeweils 2 Primären oder 1 primären und 1 sekundären oder 2 sekundären, alkylsubstituierten Aminogruppen eingesetzt. Darüberhinaus sind auch Polyamide geeignet, die als Diamin wenigstens ein Polyetherdiamin aufweisen. Erfindungsgemäß können nicht nur einzelne Polyamide auf Basis von Dimerfettsäuren, sondern auch deren Mischungen eingesetzt werden.

Geeignete Polyamide auf Basis Dimerfettsäuren sind beispielsweise beschrieben in DE 31 11 226, DE 31 11 206, DE 35 31 941, DE 35 35 732, DE 35 04 804, DE 37 25 486 und DE 38 03 524.

Erfindungsgemäß bevorzugte Polyamide zeigen einen Überschuß an Aminogruppen und haben daher eine Restaminzahl zwischen 1 und 40, bevorzugt zwischen 2 und 9. Dies gilt insbesondere für die zuvor genannten Polyamide auf Basis Dimerfettsäuren. Darüberhinaus können die erfindungsgemäß eingesetzten Polyamide auch noch eine Säurezahl zwischen 0,1 und 5, bevorzugt zwischen 0,1 und 3 haben.

Sehr günstige Ergebnisse wurden mit Polyamiden der genannten Art erzielt, die den folgenden Aufbau zeigen:

a) Polyamide aus Dimerfettsäure und kurzkettigen Dicarbonsäuren und Diaminen

b) Dimerfettsäure-Block-Copolyamide mit Polyetherblöcken und

c) Dimerfettsäure-Block-Copolyamide mit Polyesterblöcken. Unter den letzteren versteht man Polyamide, an deren Aufbau Polyester mit Carbonsäureendgruppen und/oder Alkanolamine beteiligt sind.

Die erfindungsgemäß eingesetzten Lösungsmittel sind organische Lösungsmittel. Sie werden so ausgewählt, daß sie die Carbonylverbindung einerseits, das Polymer andererseits lösen.

Es ist oftmals bevorzugt, als Lösungsmittel Alkohol einzusetzen, insbesondere solche Alkohole, wie sie als Veresterungskomponente der Carbonylverbindung vorliegen, wenn die Carbonylverbindung ein Ester ist. Zur Verbesserung der Filmbildung können dann noch aliphatische oder aromatische Lösungsmittel, insbesondere Kohlenwasserstoffe zugesetzt werden, deren Siedepunkt höher als der, der Alkohole liegt. So kann beispielsweise mit einem Lösungsmittelgemisch Isopropanol/Toluol gearbeitet werden. Toluol kann dabei jedoch auch durch Xylol oder durch aliphatische Kohlenwasserstoffe mit Siedepunkt im entsprechenden Temperaturbereich ersetzt werden, sofern die Lösungseigenschaften dadurch nicht in Mitleidenschaft gezogen werden. Unter Lösung werden hier nicht nur pysikalische Lösungen im engeren Sinne verstanden, sondern auch Zubereitungen, bei denen zumindest eine Komponente ganz oder teilweise lediglich suspendiert oder gequollen vorliegt.

Die erfindungsgemäßen Haftvermittler können darüberhinaus auch weitere Hilfsstoffe enthalten. Geeignete weitere Hilfsstoffe sind Stabilisatoren, Antioxidantien, Farbstoffe, Weichmacher oder auch weitere nicht funktionalisierte Polymere zum Zwecke der Verbesserung der Haftung an speziellen, damit verträglichen Substraten. Auswahlkriterium für derartige Stoffe ist jedoch in jedem Fall ihre Löslichkeit, d.h. sie müssen zusammen mit den Polymeren mit funktionellen Gruppen und der Carbonylverbindung in einem Lösungsmittel oder Lösungsmittelgemisch gemeinsam löslich sein.

Zur Herstellung geeigneter Haftvermittler wird der Fachmann die Einzelkomponenten in beliebiger Reihenfolge in dem Lösungsmittel oder dem Lösungsmittelgemisch lösen. Für den Fall, daß als Carbonylverbindung ein Ester gewählt wird, ist ein weiterer Gegenstand der Erfindung ein Verfahren zum Herstellen von Haftvermittlern nach einem der Ansprüche 1 bis 10, bei dem die ungesättigten Dicarbonsäuren und/oder ihre Anhydride durch Eintragen in einen primären $C_1$ - $C_6$ Alkohol, bei erhöhten Temperaturen zumindest teilweise verestert werden und das funktionelle Polymer im gleichen Alkohol oder in einem aromatischen Lösungsmittel in Lösung gebracht wird, worauf man die Lösungen vereinigt und einen Feststoffgehalt bevorzugt nicht über 30 Gew.-% sowie ein Verhältnis von Dicarbonsäurederivaten zum Polymeren, von ca. 1:50 bis 1:2, vorzugsweise 1:5 bis 1:15 einstellt.

So kann man beispielsweise Maleinsäure-Anhydrid in Isopropanol bei Siedetemperatur, während einer Zeit von 0,5 - 2 Stunden lösen und nach dem Erkalten mit der Lösung eines aminogruppenhaltigen Polyamids auf Dimer-Fettsäurebasis in Isopropanol vereinigen. Zweckmäßigerweise wird dabei die Konzentration der Carbonylverbindung wie vorstehend angegeben, die Konzentration des Polyamids auf Werte von 5 - 20 Gew.-%, bezogen auf Gesamtzubereitung, eingestellt.

Der erfindungsgemäße Haftvermittler kann durch Tauchen, Streichen, Rakeln, Walzen oder ähnliches auf die Oberfläche aufgebracht werden. Nach Abdunsten des Lösungsmittels folgt ein termischer Aktivierungsschritt, sodann kann die Verklebung erfolgen. Als Klebstoffe eignen sich heiß applizierbare Klebstoffe, oder solche, die bei der Aushärtung Wärme entwickeln oder in der Schmelze aufgetragen werden. Bevorzugt sind Schmelzklebstoffe, z.B. Schmelzklebstoffe auf Basis Ethylenvinylacetat, Polyester, Polyamide, Polyolefine oder Mischungen von Polymeren. Besonders bevorzugt sind Polyamidschmelzklebstoffe z.B. solche, die in den zuvor erwähnten deutschen Patentanmeldungen DE 31 11 226, DE 31 11 206, DE 35 31 941, DE 35 35 732, DE 35 04 804, DE 37 25 486 und DE 38 03 524 aufgelistet sind.

Die Wärmeaktivierung des Haftvermittlers kann dadurch erfolgen, daß man das Substrat beschichtet und dann im Ofen bei einer Temperatur von mehr als 120°C bis etwa 140°C während weniger Minuten aushärtet. Es können dann beliebige kalt applizierbare Klebstoffe, z.B. Epoxydklebstoffe, Polyurethane usw. eingesetzt werden. Nach einer bevorzugten Ausführungsform der Erfindung erfolgt jedoch die Wärmeaktivierung des Haftvermittlers durch die Eigenwärme eines Schmelzklebstoffes. Möglicherweise wird durch den Auftrag der heißen Schmelze eine Gelierung des Haftvermittlers hervorgerufen, funktionelle Gruppen des Schmelzklebstoffes können dabei mit funktionellen Gruppen des Haftvermittlers reagieren, so daß entsprechende Bindungen zwischen Haftvermittler und Schmelzklebstoff einerseits und dem Substrat und dem Haftvermittler andererseits entstehen.

Ein weiterer Gegenstand der Erfindung betrifft die Verwendung des erfindungsgemässen Haftvermittlers zur Oberflächenbehandlung von Polymerfasern.

Insgesamt beträgt der Feststoffgehalt der erfindungsgemäß als Oberflächenbehandlungsmittel eingesetzten Haftvermittlerlösungen 0,5 bis 40 Gew.-%, vorzugsweise 0,5 bis 15 Gew.-%.

Die erfindungsgemäß als Oberflächenbehandlungsmittel eingesetzten Haftvermittlerlösungen sind nicht in jedem Falle echte physikalische Lösungen. Ohne Nachteil für die Eigenschaften können auch Teile der miteinander gemischten Polymeren in dispergierter gequollener oder nicht gequollener Form vorliegen. In einem solchen Fall ist bei der Anwendung ein Absetzen zu verhindern. Als Lösungsmittel kommen die für Polyamide auf Basis Dimerfettsäure gängigen Lösungsmittel in Frage. So beispielsweise Mischungen aus $C_1$- bis $C_{12}$-Alkoholen, insbesondere $C_1$- bis $C_4$-Alkoholen, vorzugsweise in Abmischung mit Kohlenwasserstoffen. Ein besonders günstiges Lösungsmittelsystem besteht aus Isopropanol und Toluol, beispielsweise im Gewichtsverhältnis 9 : 1.

Gemäß der Erfindung können Polymerfasern unterschiedlichster Art beschichtet werden. So können beschichtete Fasern, insbesondere organischer Polymerer und zwar von Polymerisaten, wie von Polykondensaten, hergestellt werden. Besonders wichtige beschichtete Fasern sind Fasern aus Polyamiden, Polyestern, Polyimiden und/oder Polyethern und zwar auf Basis aromatischer und/oder aliphatischer Grundbausteine.

Im Rahmen der Erfindung kommt beschichteten aromatischen Polyamidfasern besondere Bedeutung zu. Unter aromatischen Polyamidfasern werden hier ganz allgemein Fasern, (Endlos-Fasern, Faserkurzschnitte, Faserverbunde, Garne, Pulpe, Mischfasern, Faserm mit spezieller Oberflächenstruktur und dergleichen oder textile Flächengebilde) aus aromatischen Polyamiden mit faseriger Struktur angesehen. Dabei werden unter aromatischen Polyamiden solche Polymeren verstanden, die teilweise, überwiegend oder ausschließlich aus aromatischen Ringen bestehen, die durch Carbonamidbrücken und ggf. auch zusätzlich durch andere Brückenglieder miteinander verbunden sind. Die Struktur solcher aromatischen Polyamide läßt sich zum Teil durch die folgende allgemeine Formel verdeutlichen:

$(-CO-NH\ A_1-NH-CO-A_2)_n$, in der $A_1$ und $A_2$ aromatische und/oder heterocylische Ringe bedeuten, die auch substituiert sein können. Eine wichtige Klasse von oberflächenvergüteten Fasern gemäß Erfindung leitet sich von voll aromatischen Copolyamiden ab.

Beispiele für derartige aromatische Polyamide sind: Poly-m-phenylen-isophthalamid, Handelsname Nomex[R] (US 3,287,324); Poly-p-phenylen-terephthalamid, Handelsname Kevlar[R] (DE 22 19 703). Geeignet sind weiterhin Polyamide dieser Struktur, bei denen zumindest einer der Phenylenreste ein oder mehrere Substituenten, z.B. niedrige Alkylgruppen, Alkoxygruppen oder Halogenatome trägt. Weitere aromatische Polyamide enthalten zumindest teilweise Bausteine, die sich von der 3- bzw. 4-Amino-benzoesäure ableiten.

Weiter geeignet für die Vergütung mit den erfindungsgemäßen Oberflächenbehandlungsmitteln sind solche voll aromatischen Polyamidfasern, die nach der DE 22 19 646 in Stickstoffatmosphäre bei einer Temperatur über 150°C verstreckt worden sind.

Weiterhin sind auch aromatische Polyamide geeignet, die Diaminodiphenylengruppen enthalten, bei denen zwei Phenylreste, die je eine Amino- oder Carbonsäuregruppe tragen, über ein Brückenglied, z.B. ein Heteroatom (O, S, $SO_2$, NR, $N_2$ oder eine Gruppe $CR_2$ (mit R = H oder Alkylgruppen) oder eine Gruppe CO miteinander verbunden sind. Geeignet sind schließlich auch aromatische Polyamide, bei denen die aromatischen Ringe zum Teil durch Heterocyclen ersetzt sind oder die Heterocyclen als Substituenten oder Kettenglieder mitaufweisen, sowie Fasern gemäß US-PS 4,075,172, die unter dem Handelsnamen Technora[R] angeboten werden.

Die erfindungsgemäßen Oberflächenbehandlungsmittel können an verschiedenen Stellen der Faserherstellung eingesetzt werden. So können die Oberflächenbehandlungsmittel auf noch nie getrocknete feuchte Faser aufgebracht werden (on line) oder sie können auf die getrocknete Faser (off line) aufgebracht werden. Bevorzugt ist es, die Oberflächenbehandlungsmittel nach dem Trocknen und gewünschtenfalls nach dem Verstrecken aufzubringen. Dies gilt insbesondere für Aramid-Fasern.

Beim Auftragen auf die Faser können die üblichen Auftragsgeräte eingesetzt werden. Es sind dies beispielsweise Dosierauftragssysteme, Rollenauftragssysteme oder Bäder.

Vor, während oder nach dem Auftrag kann auch eine Ultraschallbehandlung, eine elektrostatische Behandlung oder eine Plasmabehandlung der Faser oder des Garnes erfolgen. In manchen Fällen wird dies bevorzugt sein, um das Eindringen des Behandlungsmittels zu verbessern. Im jeden Falle können die hier üblichen für die Verwendung mit lösungsmittelhaltigen Zubereitungen geeigneten Gerätschaften eingesetzt werden. Die Auftragsmenge auf die Faser beträgt bezogen auf Fasergewichten 0,01 bis 12 Gew.-%.

Die Faser kann vor oder nach der Beschichtung getrocknet werden und möglicherweise kann auch in mehreren Schichten beschichtet werden, d.h. nach einem ersten Beschichtungsschritt wird getrocknet und dann in einem weiteren Bad nochmals beschichtet. Der Trocknungsprozeß kann durchgeführt werden unter Verwendung von Konvektion (beispielsweise Heißluft), Wärmeleitung (z.B. Kontakttrocknung), Strahlung (z.B. Infrarot) oder dergleichen. Die Wärmebehandlung der Faser findet üblicherweise in einem Bereich von 80 bis 220°C statt, wobei die höheren Temperaturbereich nur bei thermisch stabilen Fasern eingesetzt werden können, also beispielsweise bei Aramid-Fasern. Die Trockenzeit kann zwischen wenigen Sekunden und mehreren Minuten variieren in Abhängigkeit von dem zu erzielenden Trocknungsgrad und der weiteren Verwendung der Faser. Die Laufgeschwindigkeit der Faser oder Garne in der Beschichtungseinrichtung kann je nach der angestrebten Produktaufnahmemenge zwischen wenigen Metern pro Minute und einigen hundert Metern pro Minute gewählt werden, wobei eine obere Grenze der Laufgeschwindigkeit bei etwa 850 m/min liegt. Typische Werte für die Laufgeschwindigkeit können zwischen 750 und 825 m/min liegen. Dabei ist darauf zu achten, daß eine untere Grenze der Trockenzeit von etwa 5 Sekunden eingehalten wird.

Die erfindungsgemäß oberflächenvergüteten Fasern sind vielfältig einsetzbar. Sie zeigen beispielsweise bei Kaltklebeverfahren bessere Substrathaftung, können jedoch auch in Kunststoffe eingebettet oder in Gummi einvulkanisiert werden, wobei die Fasern dann zu polaren wie apolaren Gummiarten verbesserte Bindefähigkeit aufweisen.

Beispiele:

Die zur Herstellung der nachfolgenden Haftvermittler eingesetzten Polyamide hatten folgende Zusammensetzung:

Beispiel 1: Polyamid

| Dimerfettsäure: | 59,0 Gew.-% |
|---|---|
| Stearinsäure: | 1,0 Gew.-% |
| Azelainsäure: | 17,0 Gew.-% |
| Diaminoethan: | 3,2 Gew.-% |
| Piperazin | 19,8 Gew.-% |
| Aminzahl: | 3,5 |
| Erweichungspunkt: | 140 °C |

Beispiel 2: Polyamid

| Dimerfettsäure: | 76,4 Gew.-% |
|---|---|
| Azelainsäure: | 5,2 Gew.-% |
| Diaminoethan: | 7,6 Gew.-% |
| N-Alkyl-propylendiamin: (Alkyl = Stearyl) | 10,8 Gew.-% |
| Aminzahl: | 3,2 |
| Erweichungspunkt: | 140 °C |

Beispiel 3: Polyetherblöcke enthaltendes PA-Copolymer

| Dimerfettsäure: | 72,6 Gew.-% |
|---|---|
| Stearinsäure: | 7,8 Gew.-% |
| Diaminoethan: | 7,9 Gew.-% |
| Bis-(3-aminopropyl)-poly-tetrahydrofuran (MG 1100): | 11,7 Gew.-% |
| Aminzahl: | 5,5 |
| Erweichungspunkt: | 100 °C |

Die verwendete Dimerfettsäure ist folgendermaßen charakterisiert: 1% Monomer-Gehalt, 4% Trimer-Gehalt.

Zur Herstellung der Haftvermittler werden die Polyamide 20 Gew.-%ig in Isopropanol unter Erwärmen gelöst, sodann wird getrennt eine Lösung von 10 Gew.-% Maleinsäureanhydrid in Isopropanol hergestellt und ca. eine Stunde unter Rückfluß am Sieden gehalten. Nach Erkalten auf Raumtemperatur werden die Lösungen der Rezeptur entsprechend vermischt und mit Toluol ergänzt.

Beispiel 4 Haftvermittler

| Zusammensetzung: | Polyamid aus Beispiel 1 | 10 Gew.-% |
|---|---|---|
| | Maleinsäureanhydrid | 1 Gew.-% |
| | Lösemittel* | 89 gew.-% |

* Lösemittel in den Beispielen jeweils: Isopropanol/Toluol wie 17,5:1 (Gewichtsverhältnis)

Beispiel 5

| Zusammensetzung: | Polyamid aus Beispiel 2 | 12 Gew.-% |
| | Maleinsäureanhydrid | 1 Gew.-% |
| | Lösemittel* | 87 Gew.-% |

* Lösemittel in den Beispielen jeweils: Isopropanol/Toluol wie 17,5:1 (Gewichtsverhältnis)

Beispiel 6

| Zusammensetzung: | Polyamid aus Beispiel 3 | 8 Gew.-% |
| | Maleinsäureanhydrid | 1 Gew.-% |
| | Lösemittel* | 91 Gew.-% |

* Lösemittel in den Beispielen jeweils: Isopropanol/Toluol wie 17,5:1 (Gewichtsverhältnis)

Mit den Haftvermittlern der Beispiele 4 - 6 werden die Metall-Prüfkörper durch Bestreichen mit einem Pinsel oder Schwamm behandelt. Nach Abdunsten des Lösemittels können die Prüfkörper zur Verklebung eingesetzt werden.

Prüfkörperherstellung und Testparameter

Folien der zu verklebenden Werkstoffe (Metalle, Kunststoffe) werden auf ein Maß von 10 x 10 cm formatiert. Zwischen diesen Flächen werden nebeneinander gelegt:
a) ein Klebstofffilm von 7 x 10 cm, der eine Dicke von größer 100% der nach dem Verschmelzungsvorgang erwarteten Restfilmstärke aufweist, d.h. es wird ein Klebstofffilm aufgetragen, der zunächst etwas dicker ist und dann beim Verschmelzungsvorgang schrumpft (vgl. DIN 53531).
b) eine Polytetrafluorethylen-Folie von 3 x 10 cm, die Dicke muß kleiner sein als die erwartete Restfilmstärke.
Neben diesen Prüfkörpern werden Distanzbleche positioniert, deren Dicke nach Berechnung die gewünschte Klebstoff-Schichtstärke nach Erwärmung und Verpressung garantiert.
Der oben beschriebene, noch unverklebte Verbund wird oberhalb des Erweichungsbereiches des Klebstoffes verpreßt.
Nach Abkühlung wird die Polytetrafluorethylen-Folie entfernt und Prüfling von 2,5,x 10 cm so formatiert, daß ein Zugschälfläche von 7 x 10 cm resultiert.

Gemessen wird die Zugschälkraft in N/25 mm bei einer Abzugsgeschwindigkeit von 50 mm/min.

Tabelle 1

Zugschälfestigkeit in N/25 mm an verschiedenen schwierig zu verklebenden Substraten mit und ohne Haftvermittler

Klebstoff: Polyamid nach Beispiel 1

| | Haftvermittler Beispiel 4 | Haftvermittler Beispiel 5 | Haftvermittler Beispiel 6 | ohne Haftvermittler |
|---|---|---|---|---|
| Stahl 1405 | 200 | 230 | 160 | 60 |
| Stahl verzinkt | 290 | 210 | 340 | 130 |
| Aluminium chromatiert | 362 | 305 | 185 | 165 |
| Kupfer | 200 | 95 | 110 | 80 |

8

EP 0 367 137 B1

Tabelle 2

Zugschälfestigkeiten in N/25 mm an verschieden schwierig zu verklebenden Substraten mit und ohne Haftvermittler

Klebstoff: Ethylen-Vinylacetat-Copolymer

Erweichungspunkt: 95°C (ASTM E28)

Viskosität: 40 Pas (ASTM D3236, Brookfield), bei 160°C

Bezeichnung: Macromelt(R) Q 3261

| | Haftvermittler Beispiel 4 | ohne Haftvermittler |
|---|---|---|
| Stahl 1405 | 165 | 40 |
| Stahl verzinkt | 125 | 68 |
| Aluminium chromatiert | 130 | 62 |
| Kupfer | 145 | 80 |

Beispiel 7

Für die Behandlung von Aramid-Fasern wurden Lösungen mit einem Festkörpergehalt zwischen 0,5 und 11 Gew.-% hergestellt. Im folgenden wurde mit einer Lösung mit 5 Gew.-% Feststoffgehalt gearbeitet.

9

Test auf Aramid-Fasern

Ein Aramid-Garn vom Typ p-Phenylendiamin-terephthalamid wird nach dem Trocknen durch ein Bad (3 Gew.-% Feststoffgehalt) des erfindungsgemäß einzusetzenden Oberflächenbehandlungsmittels (Haftvermittler) nach Beispiel 4 gezogen und anschließend bei ca. 120°C getrocknet. Das Garn hatte eine Vorspannung von 0,6 daN. Es handelte sich um ein unverdrilltes 1670 dtex Garn. Das Garn durchläuft das Tauchbad mit einer Geschwindigkeit von etwa 30m/min. Es wurden die Reibungskoeffizienten zu verschiedenen Materialien bei Raumtemperatur bestimmt (Gerät: Rothschild F Meter R 1112). Der Reibungskoeffizient Faser zu Faser betrug 0,10, der Reibungskoeffizient Faser zu Metall 0,40, der Reibungskoeffizient Faser zu Keramik betrug 0,33. Für ein Standard ausgerüstetes Garn (Kevlar$^{(R)}$29) betrugen die Werte 0,11 (Faser zu Faser); 0,54 (Faser zu Metall); 0,38 (Faser zu Keramik).

Strickversuche mit behandelten Garnen

Aramid-Garne (Kevlar$^{(R)}$) wurden auf einer ELHA$^{(R)}$ Kreisstrickmaschine (Modell RRU) verstrickt. Der Test dauerte 4 Stunden. Die Maschinengeschwindigkeit war 670 min$^{-1}$, die Strickgeschwindigkeit 15 m/min. Im Gegensatz zu unbehandelten Garnen wurde beim erfindungsgemäß behandelten Garn kein Verschleißen beobachtet. Das Bild der Strickware war einheitlich. Weiterhin bildeten sich keine Ablagerungen in der Strickmaschine. Dies bedeutet, daß die erfindungsgemäßen Oberflächenbehandlungsmittel die Verstrickbarkeit von Aramid-Garnen deutlich verbessern. Bei einem Standard ausgerüsteten Kevlar-Garn wurde Faserspließ und Ablagerungen an der Strickmaschine beobachtet.

**Patentansprüche**
**Patentansprüche für folgende Vertragsstaaten : AT, BE, CH, DE, FR, GB, IT, LI, NL, SE**

1. Wärmeaktivierbarer Haftvermittler zur Oberflächenbehandlung von Metallen oder Kunststoffen vor dem Verkleben, enthaltend
   - 0,1 - 10 Gew.-% einer Carbonylverbindung mit mindestens einer aktivierten Doppelbindung, wobei als Carbonylverbindung ungesättigte Dicarbonsäuren eingesetzt werden, bei denen mindestens eine Carbonylgruppe in Konjugation mit der Doppelbindung ist und/oder deren Derivate enthalten sind
   - 5 - 30 Gew.-% eines Polymeren mit funktionellen Gruppen, wobei als Polymere mit funktionellen Gruppen Polykondensate, Polyaddukte und/oder Polymerisate mit Carbonsäure-gruppen, Aminogruppen und/oder Hydroxylgruppen eingesetzt werden.
   - 0 - 10 Gew.-% weiterer Hilfsstoffe sowie
   - ein oder mehrere organische Lösungsmittel ad 100 Gew.-%.

2. Haftvermittler nach Anspruch 1, dadurch gekennzeichnet, daß als Carbonylverbindungen Ester und/oder Halbester ungesättigter Dicarbonsäuren, bei denen zumindest eine Carbonylgruppe in Konjugation mit der Doppelbindung steht enthalten sind.

3. Haftvermittler nach einem der Ansprüche 1 oder 2, dadurch gekennzeichnet,daß als Carbonylverbindung Ester und/oder Halbester der Maleinsäure mit primären $C_1 - C_6$ Alkoholen enthalten sind.

4. Haftvermittler nach einem der Ansprüche 1 bis 3 , dadurch gekennzeichnet, daß als Polymere Polyester, Polyamide und/oder Polyurethane mit Amino-, Carbonsäure- und/oder Hydroxylgruppen vorhanden sind.

5. Haftvermittler nach einem der Ansprüche 1 bis 4, dadurch gekennzeichnet, daß als Polymere Polyamide auf Basis von Dimer-Fettsäure vorhanden sind.

6. Haftvermittler nach einem der Ansprüche 1 bis 5, dadurch gekennzeichnet, daß als Polymere Polyamide auf Basis von Dimer-Fettsäure mit einer Aminzahl von 1 - 40, vorzugsweise 2 - 9 vorhanden sind.

7. Haftvermittler nach einem der Ansprüche 1 bis 6, dadurch gekennzeichnet, daß als Lösungsmittel $C_1 - C_6$ Alkohole, gewünschtenfalls in Abmischung mit höher siedenden aromatischen und/oder aliphatischen Kohlenwasserstoffen vorhanden sind.

EP 0 367 137 B1

8. Haftvermittler nach einem der Ansprüche 1 bis 7, dadurch gekennzeichnet, daß als Hilfsstoffe Stabilisatoren, Antioxidantien, Farbstoffe, Weichmacher und Verdickungsmittel vorhanden sind.

9. Verfahren zum Herstellen von Haftvermittlern nach einem der Ansprüche 1 bis 8 , dadurch gekennzeichnet, daß die ungesättigten Dicarbonsäuren und/oder ihre Anhydride durch Eintragen in einen primären $C_1$ - $C_6$ Alkohol, bei erhöhten Temperaturen zumindest teilweise verestert werden und das funktionelle Polymer im gleichen Alkohol oder in einem aromatischen Lösungsmittel in Lösung gebracht wird, worauf man die Lösungen vereinigt und einen Feststoffgehalt nicht über 30 Gew.-% sowie ein Verhältnis von Dicarbonsäurederivaten zum Polymeren, von ca. 1:50 bis 1:2, vorzugsweise 1:5 bis 1:15 einstellt.

10. Verfahren nach Anspruch 9 , dadurch gekennzeichnet, daß man Maleinsäureanhydrid in Isopropanol bei Siedetemperatur, während 0,5 - 2 Stunden löst und nach Erkalten, mit der Lösung eines aminogruppenhaltigen Polyamids auf Dimer-Fettsäurebasis in Isopropanol vereinigt und gewünschtenfalls mit einem aromatischen Kohlenwasserstoff weiter verdünnt.

11. Verwendung des wärmeaktivierbaren Haftvermittlers nach den Ansprüchen 1-8 zur Oberflächenbehandlung von Polymerfasern.

12. Polymerfaser, enthaltend zumindest anteilsweise ein Oberflächenbehandlungsmittel nach einem der Ansprüche 1 - 9 .

13. Polymerfaser nach Anspruch 12, dadurch gekennzeichnet, daß sie aus Polyamiden, Polyestern, Polyimiden aufgebaut ist.

14. Polymerfaser nach einem der Ansprüche 12 oder 13, dadurch gekennzeichnet, daß sie aus aromatischen Polyamiden aufgebaut ist.

15. Polymerfaser nach einem der Ansprüche 12 - 14, dadurch gekennzeichnet, daß die Menge an Beschichtungsmitteln 0,01 bis 12 Gew.-%, bezogen auf Fasergewicht, beträgt.

16. Verfahren zur Modifizierung von Polymerfasern, dadurch gekennzeichnet, daß man die Faser nach den Ansprüchen 12 - 15 unter Verwendung einer Harzlösung behandelt, indem man sie vor oder nach dem ersten Trocknen in ein mit der Harzlösung beschicktes Bad taucht und gewünschtenfalls bei Temperaturen über 100°C trocknet und/oder nachbehandelt.

**Patentansprüche für folgenden Vertragsstaat : ES**

1. Verwendung eines Gemisches, enthaltend
   - 0,1 - 10 Gew.-% einer Carbonylverbindung mit mindestens einer aktivierten Doppelbindung, wobei als Carbonylverbindung ungesättigte Dicarbonsäuren eingesetzt werden, bei denen mindestens eine Carbonylgruppe in Konjugation mit der Doppelbindung ist und/oder deren Derivate enthalten sind
   - 5 - 30 Gew.-% eines Polymeren mit funktionellen Gruppen , wobei als Polymere mit funktionellen Gruppen Polykondensate, Polyaddukte und/oder Polymerisate mit Carbonsäuregruppen, Aminogruppen und/oder Hydroxylgruppen eingesetzt werden.
   - 0 - 10 Gew.-% weiterer Hilfsstoffe sowie
   - ein oder mehrere organische Lösungsmittel ad 100 Gew.-%
   als wärmeaktivierbarer Haftvermittler zur Oberflächenbehandlung von Metallen oder Kunststoffen vor dem Verkleben.

2. Verwendung des Gemisches nach Anspruch 1,
   dadurch gekennzeichnet, daß als Carbonylverbindungen Ester und/oder Halbester ungesättigter Dicarbonsäuren, bei denen zumindest eine Carbonylgruppe in Konjugation mit der Doppelbindung steht enthalten sind.

3. Verwendung des Gemisches nach einem der Ansprüche 1 oder 2, dadurch gekennzeichnet,daß als Carbonylverbindung Ester und/oder Halbester der Maleinsäure mit primären $C_1$ - $C_6$ Alkoholen

11

enthalten sind.

**4.** Verwendung des Gemisches nach einem der Ansprüche 1 bis 3, dadurch gekennzeichnet, daß als Polymere Polyester, Polyamide und/oder Polyurethane mit Amino-, Carbonsäure- und/oder Hydroxylgruppen vorhanden sind.

**5.** Verwendung des Gemisches nach einem der Ansprüche 1 bis 4, dadurch gekennzeichnet, daß als Polymere Polyamide auf Basis von Dimer-Fettsäure vorhanden sind.

**6.** Verwendung des Gemisches nach einem der Ansprüche 1 bis 5, dadurch gekennzeichnet, daß als Polymere Polyamide auf Basis von Dimer-Fettsäure mit einer Aminzahl von 1 - 40, vorzugsweise 2 - 9 vorhanden sind.

**7.** Verwendung des Gemisches nach einem der Ansprüche 1 bis 6, dadurch gekennzeichnet, daß als Lösungsmittel $C_1$ - $C_6$ Alkohole, gewünschtenfalls in Abmischung mit höher siedenden aromatischen und/ oder aliphatischen Kohlenwasserstoffen vorhanden sind.

**8.** Verwendung des Gemisches nach einem der Ansprüche 1 bis 7, dadurch gekennzeichnet, daß als Hilfsstoffe Stabilisatoren, Antioxidantien, Farbstoffe, Weichmacher und Verdickungsmittel vorhanden sind.

**9.** Verfahren zum Herstellen von Haftvermittlern nach einem der Ansprüche 1 bis 8 , dadurch gekennzeichnet, daß die ungesättigten Dicarbonsäuren und/oder ihre Anhydride durch Eintragen in einen primären $C_1$ - $C_6$ Alkohol, bei erhöhten Temperaturen zumindest teilweise verestert werden und das funktionelle Polymer im gleichen Alkohol oder in einem aromatischen Lösungsmittel in Lösung gebracht wird, worauf man die Lösungen vereinigt und einen Feststoffgehalt nicht über 30 Gew.-% sowie ein Verhältnis von Dicarbonsäurederivaten zum Polymeren, von ca. 1:50 bis 1:2, vorzugsweise 1:5 bis 1:15 einstellt.

**10.** Verfahren nach Anspruch 9 , dadurch gekennzeichnet, daß man Maleinsäureanhydrid in Isopropanol bei Siedetemperatur, während 0,5 - 2 Stunden löst und nach Erkalten, mit der Lösung eines aminogruppenhaltigen Polyamids auf Dimer-Fettsäurebasis in Isopropanol vereinigt und gewünschtenfalls mit einem aromatischen Kohlenwasserstoff weiter verdünnt.

**11.** Verwendung des Gemisches nach den Ansprüchen 1- 8 zur Oberflächenbehandlung von Polymerfasern.

**12.** Verwendung des Gemisches nach den Ansprüchen 1- 8 zur Oberflächenbehandlung von Polyamiden, Polyestern und Polyimiden.

**13.** Verwendung des Gemisches nach den Ansprüchen 1- 8 zur Oberflächenbehandlung von aromatischen Polyamiden.

**14.** Verwendung des Gemisches nach den Ansprüchen 1- 8 zur Oberflächenbehandlung von Polymerfasern, wobei die Menge an Beschichtungsmitteln 0,01 bis 12 Gew.-%, bezogen auf Fasergewicht, beträgt.

**15.** Verfahren zur Modifizierung von Polymerfasern, dadurch gekennzeichnet, daß man die Faser nach den Ansprüchen 12 - 14 unter Verwendung einer Harzlösung behandelt, indem man sie vor oder nach dem ersten Trocknen in ein mit der Harzlösung beschicktes Bad taucht und gewünschtenfalls bei Temperaturen über 100°C trocknet und/oder nachbehandelt.

**Claims**
**Claims for the following Contracting States : AT, BE, CH, DE, FR, GB, IT, LI, NL, SE**

**1.** A heat-activatable adhesion promoter for treating the surfaces of metals or synthetic materials (plastics) prior to bonding, which adhesion promoter contains

- from 0.1 to 10% by weight of a carbonyl compound having at least one activated double bond, wherein unsaturated dicarboxylic acids of which at least one carboxylic group is in conjugation with the double bond and/or derivatives thereof are employed as the carbonyl compound,
- from 5 to 30% by weight of a polymer having functional groups, wherein polycondsensates, polyadducts and/or polymerizates having carboxylic acid groups, amino groups and/or hydroxyl groups are employed as the polymer having functional groups,
- from 0 to 10% by weight of further auxiliary materials, as well as
- one or more organic solvent(s) to make 100% by weight.

2. The adhesion promoter according to claim 1, characterized in that esters and/or semi-esters of unsaturated dicarboxylic acids wherein at least one carbonyl group is in conjugation with the double bond are contained as the carbonyl compound.

3. The adhesion promoter according to either of claims 1 or 2, characterized in that esters and/or semi-esters of maleic acid with primary $C_1$- to $C_6$-alcohols are contained as the carbonyl compound.

4. The adhesion promoter according to any one of claims 1 to 3, characterized in that polyesters, polyamides and/or polyurethanes with amino groups, carboxylic acid groups and/or hydroxyl groups are present as polymers.

5. The adhesion promoter according to any one of claims 1 to 4, characterized in that polyamides derived from dimer fatty acid are present as polymers.

6. The adhesion promoter according to any one of claims 1 to 5, characterized in that polyamides derived from dimer fatty acid having an amine value of from 1 to 40, and preferably of from 2 to 9, are present as polymers.

7. The adhesion promoter according to any one of claims 1 to 6, characterized in that $C_1$-$C_6$ alcohols, if desired in admixture with higher-boiling aromatic and/or aliphatic hydrocarbons, are present as solvents.

8. The adhesion promoter according to any one of claims 1 to 7, characterized in that stabilizers, antioxidants, dyes, plasticizers and thickening agents are present as auxiliary materials.

9. A process for preparing adhesion promoters according to one of claims 1 to 8, characterized in that the unsaturated dicarboxylic acids and/or the anhydrides thereof are at least partially esterified by charging them into a primary $C_1$-$C_6$ alcohol at elevated temperatures, and the functional polymer is dissolved in the same alcohol or in an aromatic solvent, whereafter the two solutions are combined and adjusted to a solids content not in excess of 30% by weight and to a ratio of dicarboxylic acid derivatives to the polymer of about 1:50 to 1:2, and preferably of from 1:5 to 1:15.

10. The process according to claim 9, characterized in that maleic anhydride is dissolved in isopropanol at the boiling temperature for a period of from 0.5 to 2 hours and, upon cooling, the solution is combined with the solution of a polyamide containing amino groups and derived from dimer fatty acid in isopropanol and, if desired, the mixture is further diluted with an aromatic hydrocarbon.

11. Use of the heat-activatable adhesion promoter according to claims 1 to 8 for treating the surfaces of polymer fibers.

12. A polymer fiber containing at least portionwise a surface treatment agent according to anyone of claims 1 to 9.

13. The polymer fiber according to claim 12, characterized in that it is composed of polyamides, polyesters, polyimides.

14. The polymer fiber according to either of claims 12 or 13, characterized in that it is composed of aromatic polyamides.

EP 0 367 137 B1

**15.** The polymer fiber according to anyone of claims 12 to 14, characterized in that the amount of coating agents is from 0.01 to 12% by weight, based on the fiber weight.

**16.** A process for modifying polymer fibers, characterized in that the fiber according to claims 12 to 15 is treated by using a resin solution, wherein said fiber before or after the first drying is immersed in a bath charged with the resin solution and, if desired, is dried and/or after-treated at temperatures in excess of 100 °C.

**Claims for the following Contracting State : ES**

**1.** Use of a mixture containing
- from 0.1 to 10% by weight of a carbonyl compound having at least one activated double bond, wherein unsaturated dicarboxylic acids of which at least one carboxylic group is in conjugation with the double bond and/or derivatives thereof are employed as the carbonyl compound,
- from 5 to 30% by weight of a polymer having functional groups, wherein polycondsensates, polyadducts and/or polymerizates having carboxylic acid groups, amino groups and/or hydroxyl groups are employed as the polymer having functional groups,
- from 0 to 10% by weight of further auxiliary materials, as well as
- one or more organic solvent(s) to make 100% by weight.

as a heat-activatable adhesion promoter for treating the surfaces of metals or synthetic materials (plastics) prior to bonding.

**2.** Use of the mixture according to claim 1, characterized in that esters and/or semi-esters of unsaturated dicarboxylic acids wherein at least one carbonyl group is in conjugation with the double bond are contained as the carbonyl compound.

**3.** Use of the mixture according to either of claims 1 or 2, characterized in that esters and/or semi-esters of maleic acid with primary $C_1$- to $C_6$-alcohols are contained as the carbonyl compound.

**4.** Use of the mixture according to any one of claims 1 to 3, characterized in that polyesters, polyamides and/or polyurethanes with amino groups, carboxylic acid groups and/or hydroxyl groups are present as polymers.

**5.** Use of the mixture according to any one of claims 1 to 4, characterized in that polyamides derived from dimer fatty acid are present as polymers.

**6.** Use of the mixture according to any one of claims 1 to 5, characterized in that polyamides derived from dimer fatty acid having an amine value of from 1 to 40, and preferably of from 2 to 9, are present as polymers.

**7.** Use of the mixture according to any one of claims 1 to 6, characterized in that $C_1$-$C_6$ alcohols, if desired in admixture with higher-boiling aromatic and/or aliphatic hydrocarbons, are present as solvents.

**8.** Use of the mixture according to any one of claims 1 to 7, characterized in that stabilizers, antioxidants, dyes, plasticizers and thickening agents are present as auxiliary materials.

**9.** A process for preparing adhesion promoters according to one of claims 1 to 8, characterized in that the unsaturated dicarboxylic acids and/or the anhydrides thereof are at least partially esterified by charging them into a primary $C_1$-$C_6$ alcohol at elevated temperatures, and the functional polymer is dissolved in the same alcohol or in an aromatic solvent, whereafter the two solutions are combined and adjusted to a solids content not in excess of 30% by weight and to a ratio of dicarboxylic acid derivatives to the polymer of about 1:50 to 1:2, and preferably of from 1:5 to 1:15.

**10.** The process according to claim 9, characterized in that maleic anhydride is dissolved in isopropanol at the boiling temperature for a period of from 0.5 to 2 hours and, upon cooling, the solution is combined with the solution of a polyamide containing amino groups and derived from dimer fatty acid in isopropanol and, if desired, the mixture is further diluted with an aromatic hydrocarbon.

14

**11.** Use of the mixture according to claims 1 to 8 for treating the surfaces of polymer fibers.

**12.** Use of the mixture according to claims 1 to 8 for treating the surfaces of polyamides, polyesters, polyimides.

**13.** Use of the mixture according to claims 1 to 8 for treating the surfaces of aromatic polyamides.

**14.** Use of the mixture according to claims 1 to 8 for treating the surfaces of polymer fibers, wherein the amount of coating agents is from 0.01 to 12% by weight, based on the fiber weight.

**15.** A process for modifying polymer fibers, characterized in that the fiber according to claims 12 to 14 is treated by using a resin solution, wherein said fiber before or after the first drying is immersed in a bath charged with the resin solution and, if desired, is dried and/or after-treated at temperatures in excess of 100 °C.

**Revendications**
**Revendications pour les Etats contractants suivants : AT, BE, CH, DE, FR, GB, IT, LI, NL, SE**

**1.** Agent d'adhérence activable à la chaleur pour le traitement de surface de métaux ou matières plastiques avant le collage contenant :
- 0,1-10 % en poids d'un composé carbonyle avec au moins une double liaison activée, en utilisant comme composé carbonyle des acides dicarboxyliques insaturés, pour lesquels au moins un groupe carbonyle est conjugué à la double liaison, et/ou ses dérivés,
- 5-30 % en poids d'un polymère à groupes fonctionnels, en utilisant comme polymères à groupes fonctionnels des polycondensats, polyproduits d'addition et/ou des polymères à groupe carboxylique, groupe amino et/ou groupes hydroxyles,
- 0-10 % d'autres additifs ainsi que
- un ou plusieurs solvants organiques pour compléter à 100 % en poids.

**2.** Agent d'adhérence selon la revendication 1, caractérisé en ce qu'il comprend comme composés carbonyle des esters et/ou demi-esters d'acides dicarboxyliques insaturés, dans lesquels au moins un groupe carbonyle est conjugué à la double liaison.

**3.** Agent d'adhérence selon l'une des revendications 1 ou 2, caractérisé en ce qu'il contient comme composé carbonyle des esters et/ou demi-esters d'acide maléique et d'alcools primaires $C_1$ - $C_6$.

**4.** Agent d'adhérence selon l'une des revendications 1 à 3, caractérisé en ce qu'il contient comme polymères des polyesters, des polyamides et/ou des polyuréthannes avec des groupes amino, acide carboxylique et/ou hydroxyle.

**5.** Agent d'adhérence selon l'une des revendications 1 à 4, caractérisé en ce qu'il contient comme polymères des polyamides à base d'acide gras dimère.

**6.** Agent d'adhérence selon l'une des revendications 1 à 5, caractérisé en ce qu'il contient comme polymères des polyamides à base d'acide gras dimère avec un indice d'amine de 1-40, de préférence de 2-9.

**7.** Agent d'adhérence selon l'une des revendications 1 à 6, caractérisé en ce qu'il contient comme solvants des alcools $C_1$-$C_6$, si c'est souhaité en mélange avec des hydrocarbures aromatiques et/ou aliphatiques de point d'ébullition plus élevé.

**8.** Agent d'adhérence selon l'une des revendications 1 à 7, caractérisé en ce qu'il contient comme additifs des stabilisants, des antioxydants, des colorants, des plastifiants et des épaississants.

**9.** Procédé de préparation d'agents d'adhérence selon l'une des revendications 1 à 8, caractérisé en ce qu'on estérifie au moins partiellement les acides dicarboxyliques insaturés et/ou leurs anhydrides par incorporation dans un alcool primaire $C_1$-$C_6$, à température élevée et on dissout le polymère fonctionnel dans le même alcool ou dans un solvant aromatique, ensuite on réunit les solutions, et on ajuste une teneur en solide qui ne dépasse pas 30 % en poids ainsi qu'un rapport de dérivés d'acide dicarboxylique aux polymères d'environ 1:50 à 1:2, de préférence 1:5 à 1:15.

10. Procédé selon la revendication 9, caractérisé en ce qu'on dissout l'anhydride maléique dans l'isopropanol à température d'ébullition, pendant 0,5-2 heures, et après refroidissement on réunit à la solution d'un polyamide portant des groupes amino à base d'acide gras dimère dans de l'isopropanol et si c'est souhaité on dilue encore avec un hydrocarbure aromatique.

11. Utilisation de l'agent d'adhérence activable à la chaleur selon les revendications 1-8 pour le traitement de surface de fibres de polymères.

12. Fibre de polymère comprenant au moins partiellement un agent de traitement de surface selon l'une des revendications 1-9.

13. Fibre de polymère selon la revendication 12, caractérisée en ce qu'elle est constituée de polyamides, polyesters, polyimides.

14. Fibre de polymère selon l'une des revendications 12 ou 13, caractérisé en ce qu'elle est constituée de polyamides aromatiques.

15. Fibre de polymère selon l'une des revendications 12-14, caractérisée en ce que la quantité d'agents d'enduction représente de 0,01 à 12 % en poids, par rapport au poids de fibre.

16. Procédé de modification de fibres de polymère, caractérisé en ce qu'on traite les fibres selon les revendications 12-15 en utilisant une solution de résine, en les trempant avant ou après le premier séchage dans un bain comportant la solution de résine et si c'est souhaité on sèche à des températures supérieures à 100°C et/ou on traite ultérieurement.

**Revendications pour l'Etat contractant suivant : ES**

1. Utilisation d'un mélange contenant :
   - 0,1-10 % en poids d'un composé carbonyle avec au moins une double liaison activée, en utilisant comme composé carbonyle des acides dicarboxyliques insaturés, pour lesquels au moins un groupe carbonyle est conjugué à la double liaison, et/ou ses dérivés,
   - 5-30 % en poids d'un polymère à groupes fonctionnels, en utilisant comme polymères à groupes fonctionnels des polycondensats, polyadducts et/ou des polymères à groupe carboxylique, groupe amino et/ou groupes hydroxyles,
   - 0-10 % d'autres additifs ainsi que
   - un ou plusieurs solvants organiques pour compléter à 100 % en poids.

2. Utilisation du mélange selon la revendication 1, caractérisé en ce qu'il comprend comme composés carbonyle des esters et/ou demi-esters d'acides dicarboxyliques insaturés dans lesquels au moins un groupe carbonyle est conjugué à la double liaison.

3. Utilisation du mélange selon l'une des revendications 1 ou 2, caractérisé en ce qu'il contient comme composé carbonyle des esters et/ou demi-esters d'acide maléique et d'alcools primaires $C_1$ -$C_6$ .

4. Utilisation du mélange selon l'une des revendications 1 à 3, caractérisé en ce qu'il contient comme polymères des polyesters, des polyamides et/ou des polyuréthannes avec des groupes amino, acide carboxylique et/ou hydroxyles.

5. Utilisation du mélange selon l'une des revendications 1 à 4, caractérisé en ce qu'il contient comme polymères des polyamides à base d'acide gras dimère.

6. Utilisation du mélange selon l'une des revendications 1 à 5, caractérisé en ce qu'il contient comme polymères des polyamides à base d'acide gras dimère avec un indice d'amine de 1-40, de préférence de 2-9.

**7.** Utilisation du mélange selon l'une des revendications 1 à 6, caractérisé en ce qu'il contient comme solvants des alcools $C_1$-$C_6$, si c'est souhaité en mélange avec des hydrocarbures aromatiques et/ou aliphatiques de point d'ébullition plus élevé.

**8.** Utilisation du mélange selon l'une des revendications 1 à 7, caractérisé en ce qu'il contient comme additifs des stabilisants, des antioxydants, des colorants, des plastifiants et des épaississants.

**9.** Procédé de préparation d'agents d'adhérence selon l'une des revendications 1 à 8, caractérisé en ce qu'on estérifie au moins partiellement les acides dicarboxyliques insaturés et/ou leurs anhydrides par incorporation dans un alcool primaire $C_1$-$C_6$, a température élevée et on dissout le polymère fonctionnel dans le même alcool ou dans un solvant aromatique, ensuite on réunit les solutions, et on ajuste une teneur en solide qui ne dépasse pas 30 % en poids ainsi qu'un rapport de dérivés d'acide dicarboxylique aux polymères d'environ 1:50 à 1:2, de préférence 1:5 à 1:15.

**10.** Procédé selon la revendication 9, caractérisé en ce qu'on dissout l'anhydride maléique dans l'isopropanol à température d'ébullition, pendant 0,5-2 heures, et après refroidissement on réunit à la solution d'un polyamide portant des groupes amino à base d'acide gras dimère dans de l'isopropanol et si c'est souhaité on dilue encore avec un hydrocarbure aromatique.

**11.** Utilisation du mélange selon les revendications 1-8, pour le traitement de surface de fibres de polymères.

**12.** Utilisation du mélange selon les revendications 1-8, pour le traitement de surface de polyamides, polyesters et polyimides.

**13.** Utilisation du mélange selon les revendications 1-8, pour le traitement de surface de polyamides aromatiques.

**14.** Utilisation du mélange selon les revendications 1-8, pour le traitement superficiel de fibres de polymère, dans lequel la quantité d'agents d'enduction représente de 0,01 à 12 % en poids, par rapport au poids de fibre.

**15.** Procédé de modification de fibres de polymère, caractérisé en ce qu'on traite les fibres selon les revendications 12-14 en utilisant une solution de résine, en les trempant avant ou après le premier séchage dans un bain comportant la solution de résine et si c'est souhaité on sèche à des températures supérieures à 100°C et/ou on traite ultérieurement.